# FASCICULE DE BREVET EUROPEEN

(11) **EP 3 261 430 B1**
(45) Date de publication et mention de la délivrance du brevet: **17.02.2021**
(21) Numéro de dépôt: 16714473.2
(22) Date de dépôt: 23.02.2016
(51) Int. Cl.: A01G 25/02, C09K 17/20, A01G 22/00, A01G 25/00

(54) **PROCEDE D'IRRIGATION LOCALISEE**
LOKALISIERTES BEWÄSSERUNGSVERFAHREN
LOCALIZED IRRIGATION METHOD

(30) Priorité: 24.02.2015 FR 1551580
(43) Date de publication de la demande: 03.01.2018
(73) Titulaire: S.P.C.M. SA, 42160 Andrézieux Bouthéon (FR)
(72) Inventeur: LECOINTE, Charles, 69390 Vernaison (FR)
(74) Mandataire: Cabinet Laurent & Charras
(86) Numéro de dépôt international: PCT/FR2016/050412
(87) Numéro de publication internationale: WO 2016/135410

(56) Documents cités:
- US-A- 3 633 310
- US-A- 5 120 344
- US-A1- 2009 239 973

## Description

L'invention concerne un procédé d'irrigation localisée et plus particulièrement un procédé dans lequel des polymères sont ajoutés à l'eau d'irrigation.

L'irrigation est une technique bien connue de l'homme du métier. Elle consiste à apporter artificiellement de l'eau aux sols de culture. Elle est utilisée entre autres pour des cultures consommatrices en eau (ex : maïs, coton, etc) ou encore en zone présentant une faible pluviométrie, afin de satisfaire les besoins de la plante.

Parmi les méthodes d'irrigation, on peut par exemple citer l'irrigation gravitaire (par inondation ou à la raie), l'irrigation par aspersion (avec des enrouleurs, des rampes mobiles ou des pivots) et l'irrigation localisée, sans pour autant se limiter à ces seuls exemples.

L'irrigation localisée est un ensemble de méthodes d'irrigation permettant d'apporter l'eau de façon précise, généralement à des débits d'eau réduits et à partir d'équipements fixes. L'irrigation goutte à goutte, l'irrigation par tubes poreux, l'irrigation par micro asperseurs fixes sont des exemples d'irrigation localisée.

L'irrigation goutte à goutte est une méthode d'irrigation qui met en œuvre des goutteurs permettant un apport d'eau à très faible débit. La dénomination « goutte à goutte » ne limite pourtant pas cette méthode à un apport d'eau sous la seule forme de gouttes d'eau. On peut en effet envisager un flux d'eau très faible (filet d'eau).

Les goutteurs sont des dispositifs munis d'orifices d'émission. Ils peuvent être de simples tuyaux fins, aussi appelés capillaires, dont le diamètre et la longueur sont choisis de sorte à générer une perte de charge suffisante eu égard à la pression de l'eau dans le réseau d'alimentation pour obtenir un débit d'eau réduit, généralement inférieur à 10 litres par heure. Les goutteurs peuvent aussi se présenter comme des dispositifs de régulation de débit plus sophistiqués, généralement munis de chicanes étroites, permettant parfois d'obtenir un débit fixe dans une plage de pression donnée.

Dans des conditions de production agricole, les systèmes d'irrigation goutte à goutte se présentent généralement sous la forme de tuyaux munis d'orifices pourvus d'équipements permettant de contrôler le débit de l'eau à travers cet orifice pour des pressions données (exemple : matériels UNIRAM® ou DRIPCORN® fournis par la société NETAFIM). Typiquement, les méthodes d'irrigation localisée donnent naissance à un bulbe d'irrigation positionné à proximité de chaque point d'émission d'eau. Ce bulbe apparait dans les premiers instants suivant la mise en route de l'irrigation (Le bulbe d'irrigation correspond à la zone humectée, p 46 dans le Guide Pratique d'Irrigation, Edition Cemagref).

L'objectif de ces procédés d'irrigation est de faire en sorte que les bulbes d'humectation finissent par se joindre, permettant, de proche en proche, une humectation homogène de la couche arable. En effet, une infiltration profonde de l'eau ne bénéficie pas aux cultures. Il s'ensuit que les zones qui ne bénéficieraient pas d'apport en eau d'irrigation entre les points d'émission représenteraient autant de surface moins productive. Augmenter le diamètre et du bulbe d'irrigation permet aussi d'espacer les points d'émission d'eau. Il s'ensuit une réduction du coût par unité de surface d'une installation d'irrigation localisée.

Pour permettre une meilleure répartition de l'eau, le document US6343749 propose des systèmes d'irrigation mobiles sous la forme de lignes de goutteurs se déplaçant à la surface d'une parcelle, par exemple à l'aide d'un pivot. Toutefois cette méthode requiert des matériels lourds et couteux en investissement et en énergie. De plus, les émetteurs parcourent des chemins parallèles les uns aux autres. L'absence de recouvrement des zones parcourues induit une humectation inhomogène de la couche arable.

Les systèmes d'irrigation goutte à goutte peuvent aussi être enterrés. Dans le cas d'une culture de maïs, par exemple, les tuyaux pourvus de goutteurs sont généralement enterrés entre 20 et 60 cm de profondeur. Ce type d'installation permet de laisser l'installation en place, sans avoir à déplacer ou retirer les tuyaux en surface lors des travaux au champ. Dans le cas d'un système d'irrigation goutte à goutte enterré, la remontée de l'eau à la surface est un point important, permettant de se passer d'un système d'irrigation de surface.

Des polymères à base d'acrylamide peuvent être additionnés à l'eau d'irrigation pour différents bénéfices tels que la diminution de l'érosion hydrique et éolienne, le contrôle de la battance ou le contrôle de l'infiltration de l'eau dans les sols. Le « Natural Resources Conservation Service » de l'USDA décrit de façon concise cette utilisation de polymères à base d'acrylamide additionnées à l'eau d'irrigation dans le Conservation Practice Standard Code 450.

Les polymères utilisés pour stabiliser les sols sont des polymères de haut poids moléculaires (supérieurs à 1 million de daltons). A titre d'exemple, le document EP1105443 décrit des compositions pour le traitement de sols qui peuvent être notamment bénéfiques pour la stabilisation des sols et qui peuvent être utilisées dans les méthodes d'irrigation par goutte à goutte. Les compositions sont des solutions aqueuses comprenant entre autres un polymère anionique hydrosoluble présentant une viscosité intrinsèque de 9 à 12 dL/g (à 20°C, dans une solution de NaCl 1M à pH 7.0). Il est mentionné que le polymère a un poids moléculaire suffisamment élevé pour donner un effet de stabilisation de sol. Il est aussi précisé qu'il n'est pas de bas poids moléculaire, ce qui lui procurerait sinon un rôle de dispersant.

De tels polymères peuvent être utilisés dans des systèmes d'irrigation localisée. Par exemple, Shane Phillips (Thèse de Master, 2007, Effect of Polyacrylamides on the Physical Properties of Some Light-textured Soils, Université d'Adélaide) décrit l'usage de polymères à base d'acrylamide de hauts poids moléculaire dans des systèmes d'irrigation goutte à goutte.

L'addition de ces polymères à l'eau d'irrigation se fait à partir d'émulsions, de dispersions ou d'un produit en poudre préalablement dissous dans une solution mère.

Les dispersions aqueuses de polymères (dispersion en solution saline) ont une forte teneur en sels et présentent donc un risque de colmatage des orifices de sortie de l'eau d'irrigation (goutteurs, pores, micro-asperseurs).

Les émulsions peuvent servir à préparer une solution mère ou être injectées directement dans le réseau d'eau qui alimente les goutteurs. Le document WO1998/057531 décrit ainsi l'injection du polymère sous forme d'émulsion dans un système d'irrigation sous pression.

Les polymères peuvent être additionnés à l'eau d'irrigation sous forme de poudre, par exemple dans le cas d'un système d'irrigation gravitaire. Cependant la forme poudre est peu pratique à manipuler car elle engendre la formation de poussières qui sont dangereuses pour l'utilisateur. De plus, cette forme nécessite un appareil de mélange et un temps de dissolution important. Lorsque la dissolution est mal effectuée, elle génère des grumeaux qui peuvent ensuite boucher les goutteurs d'un système goutte à goutte. Enfin, la concentration maximale de polymère soluble dans l'eau est limitée pour des polymères de haut poids moléculaire.

Utiliser une émulsion inverse de polymères à base d'acrylamide de haut poids moléculaires nécessite de pouvoir inverser correctement cette émulsion et de rapidement la diluer dans l'eau. Dans le cas, par exemple, d'un système d'irrigation par aspersion de grande dimension tel qu'un pivot, les volumes et débit d'eau mis en œuvre facilitent l'inversion de ces émulsions. Dans le cas de systèmes d'irrigation localisée tels que des systèmes d'irrigation goutte à goutte, pression et débit d'eau sont faibles, rendant aléatoire l'inversion de l'émulsion injectée dans le réseau d'alimentation en eau. Si l'inversion est réalisée de manière incorrecte, un amas de polymère se forme et peut boucher les tuyaux, les micros asperseurs ou les goutteurs par exemple. De plus, les émulsions inverses de polymères à base d'acrylamide contiennent généralement des solvants, tels que des huiles minérales, incompatibles avec certains matériaux utilisés dans les systèmes d'irrigation localisée : PVC, polyéthylène de basse densité, élastomères, etc..

Une autre solution pourrait être d'utiliser des polymères en solution. Cependant, les polyacrylamides de haut poids moléculaire en solution sont alors à de faibles concentrations (avec un maximum de concentration en polymère de 5 à 10% en masse). Cela engendrerait donc des problèmes de logistique en raison des très grandes quantités de solution à transporter et à manipuler.

Par nature, les polyacrylamides de haut poids moléculaires sont des floculants. C'est d'ailleurs ce pourquoi ils sont utilisés en agriculture. Leur pouvoir floculant stabilise les sols et limite la mise en suspension de particules, diminuant ainsi l'érosion. Dans un système d'irrigation localisée tel qu'un système d'irrigation goutte à goutte, les débits sont faibles et les orifices d'émission de l'eau sont étroits. La présence de particules en suspension dans l'eau, même en faible concentration, engendre, au contact du polyacrylamide la formation de flocs qui colmatent les orifices de sortie de l'eau d'irrigation (goutteurs, micro asperseurs, pores) voir le réseau d'alimentation en eau lui-même.

Pour résoudre ce problème, on pourrait être tenté d'additionner les polymères à base d'acrylamide de haut poids moléculaire en amont d'un système de filtration, tel que, par exemple, un filtre à sable. Ceci aurait pour effet de retirer de l'eau d'irrigation une partie non négligeable des polymères préalablement additionnés, par rétention des flocs ou adsorption des polymères, rendant l'ensemble du procédé inutile.

Le document US 3 633 310 décrit un procédé permettant d'améliorer l'irrigation des sols très perméables. Ce procédé consiste à ajouter à l'eau d'irrigation, une faible quantité de polyacrylamide de poids moléculaire compris entre 300 000 et 15 M, avantageusement entre 500 000 et 5 M. Le polyacrylamide permet de rendre toute la portion du sol irriguée moins perméable en vue d'irrigations ultérieures (sans ajout de polyacrylamide). Aucune méthode d'irrigation n'est mentionnée.

Le document US 5 120 344 décrit un procédé consistant à appliquer une couche de gel à une faible profondeur en surface du sol à irriguer pour améliorer la rétention de l'eau et des nutriments. Cette couche de gel est obtenue à partir d'une argile et d'un polymère de poids moléculaire comprise entre 50 000 et 20 M Da, préférentiellement entre 500000 et 10 M Da. Le gel est formé avant d'être introduit dans le sol ou de façon « *in situ »* dans le sol. Dans tous les cas, la couche de gel est appliquée avant toute irrigation.

Le document US 2009/0239973 A1 décrit un système d'irrigation mettant en œuvre du polyacrylamide de poids moléculaire entre 10 000 et 100 000 Da. Plusieurs modes de réalisation sont proposés. Le premier procédé consiste à pulvériser sur un pain de polyacrylamide, de l'eau d'irrigation. Le second procédé consiste à positionner le pain de polyacrylamide dans des canaux dans lesquels circule l'eau d'irrigation. Il ne s'agit pas d'un procédé d'irrigation localisé.

Le problème que se propose donc de résoudre l'invention est celui d'augmenter le diamètre du bulbe d'irrigation tout en évitant les phénomènes de floculation dans un procédé d'irrigation localisée.

Le Demandeur a constaté que de manière surprenante, la mise en œuvre d'un polymère à base d'acrylamide de faible poids moléculaire dans l'eau d'irrigation permettait de résoudre ce problème.

Plus précisément, la présente invention a pour objet un procédé d'irrigation localisée de culture ou de plantations selon lequel on injecte dans l'eau d'irrigation destinée à alimenter un équipement fixe d'irrigation localisée au moins un polymère hydrosoluble de poids moléculaire compris entre 10 000 et 500 000 Da et contenant au moins un monomère acrylamide ou méthacrylamide.

Avantageusement, le polymère hydrosoluble a un poids moléculaire compris entre 25 000 et 300 000 Da et encore plus avantageusement entre 50 000 et 250 000 Da.

Par « polymère hydrosoluble », on désigne un polymère qui, mis en solution à l'aide d'une agitation dans de l'eau à une température de 25°C à une concentration de 50g/L, donne une solution exempte de particules insolubles.

De préférence, le système d'irrigation localisée est un système d'irrigation goutte à goutte.

De préférence, on ajoute le polymère dans l'eau d'irrigation dans des conditions telles que la concentration massique en polymère dans l'eau d'irrigation soit comprise entre 0.1 ppm et 500 ppm et plus préférentiellement entre 1 et 200 ppm (1 ppm = 0.0001 % en poids).

Dans une mode de réalisation préféré, afin d'éviter tous les problèmes préalablement explicités liés à la forme physique du polymère, le ou les polymères hydrosolubles sont injectés dans l'eau d'irrigation sous forme d'une solution aqueuse dont la concentration massique en polymère hydrosoluble est comprise entre 10 et 60 % et plus préférentiellement entre 30 et 50%.

Le ou les polymères hydrosolubles sont composés préférentiellement d'au moins 50 % molaire, et plus préférentiellement d'au moins 70% molaire, du monomère acrylamide ou méthacrylamide.

Dans, un mode de réalisation préféré, ils contiennent en outre au moins un monomère anionique.

En pratique, le ou les polymères hydrosolubles contiennent dans ces conditions de 1 à 50 % molaire, et plus préférentiellement de 1 à 30% molaire, de monomères anioniques.

Les monomères anioniques sont avantageusement choisis dans le groupe comprenant l'acide acrylique, l'acide méthacrylique, l'acide itaconique, l'acide crotonique, l'acide maléique, l'acide fumarique et les monomères de type acide fort présentant par exemple, une fonction de type acide sulfonique ou acide phosphonique, tels que l'acide 2-acrylamido-2-méthylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, ou d'ammonium.

Le ou les polymères hydrosolubles pourront contenir des monomères cationiques. A titre d'exemple de monomères cationiques, on peut citer les sels de diallyldialkyl ammonium comme le chlorure de diallyl diméthyl ammonium (DADMAC) ; les sels acidifiés ou quaternisés d'acrylates et méthacrylates de dialkylaminoalkyle, en particulier d'acrylate de dialkylaminoéthyle (ADAME) et de méthacrylate de dialkylaminoéthyle (MADAME) ; les sels acidifiés ou quaternisés de dialkyl- aminoalkylacrylamides ou méthacrylamides, comme par exemple le méthacrylamido-propyl triméthyl ammonium chlorure (MAPTAC), l'acrylamido-propyl triméthyl ammonium chlorure (APTAC) et les produits de Mannich comme les dialkylaminométhylacrylamides quaternisés.

Dans un autre mode de réalisation préféré, le ou les polymères hydrosolubles seront non ioniques.

En plus de l'acrylamide ou du méthylacrylamide, le ou les polymères hydrosolubles peuvent contenir d'autres monomères non ioniques pouvant être choisis dans le groupe comprenant les monomères vinyliques solubles dans l'eau. Un monomère préféré appartenant à cette classe est, par exemple, le N-méthylolacrylamide. La N-vinylformamide peut également être utilisée.

Le ou les polymères hydrosolubles peuvent contenir au maximum 1% en poids d'un ou plusieurs monomères hydrophobes de type acrylamide, acrylique, vinylique, allylique ou maléique possédant une fonction hydrophobe latérale notamment choisi parmi les dérivés de l'acrylamide comme les N-alkylacrylamides, par exemple, le diacétone acrylamide, l'isopropyl acrylamide, le N-tert-butylacrylamide, l'octylacrylamide, les N,N-dialkylacrylamides comme le N,N-dihexylacrylamide les dérivés d'acide acrylique comme les alkyl acrylates et méthacrylates et les monomères vinyliques comme la N-vinylformamide, le N-vinyl acétamide, la N-vinylpyridine et le N-vinylimidazole et la N-vinylpyrrolidone.

Les polymères utilisés dans le cadre de l'invention ne nécessitent pas de développement de procédé de polymérisation particulier. L'homme du métier pour obtenir les polymères hydrosolubles utilisés dans le procédé optera pour une polymérisation en solution comme décrit dans Synthetic polyelectrolytes - a review - David A Mortimer - Polymer international 25 (1991) 29-41.

Conjointement aux polymères hydrosolubles, d'autres ingrédients sous forme liquide comme par exemple des produits phytosanitaires, des herbicides, des pesticides, des fongicides, des éléments fertilisants peuvent être additionnés à l'eau d'irrigation selon le procédé.

Dans le procédé de l'invention, le polymère est préférentiellement additionné à l'eau d'irrigation directement par injection en ligne de la solution polymérique concentrée dans la canalisation d'eau d'irrigation.

Pour des systèmes gravitaires (exemple système NDJ DripKit fourni par la société NANDANJAIN irrigation), l'eau d'irrigation est mise en pression dans le système d'irrigation localisée par une mise en hauteur de la réserve d'eau (cuve). Dans ce cas, le où les polymères peuvent être additionnés à l'eau d'irrigation directement dans la réserve d'eau.

L'addition d'un polymère en solution concentrée permet d'éviter de manipuler des quantités importantes de solutions polymériques mais écarte aussi le risque que des résidus de polymères non solubilisés viennent colmater les « goutteurs » pour un système d'irrigation goutte à goutte (ce qui pourrait être le cas avec un polymère en poudre ou en émulsion).

Alternativement, en cas de besoin de diluer la solution concentrée de polymères, celle-ci peut être diluée de façons successives afin d'obtenir la concentration visée dans l'eau d'irrigation à la sortie des points d'émission. Par exemple, une solution mère peut être préparée en diluant la solution concentrée avant d'injecter la solution mère, ou la solution mère peut être injectée en ligne, dans des boucles de dilution successives. Ces étapes peuvent être requises pour mettre en adéquation la concentration initiale de la solution concentrée et les équipements d'injection à disposition pour obtenir la concentration finale visée.

Enfin, le procédé de l'invention permet d'éviter les risques de colmatage des orifices d'irrigation (goutteurs, pores, micro asperseurs) par flocculation des particules en suspension dans l'eau d'irrigation mais aussi d'obtenir une irrigation homogène autour des goutteurs et ceci dans les trois dimensions.

L'invention et les avantages qui en découlent ressortiront bien des exemples de réalisation suivants à l'appui de la figure annexée.

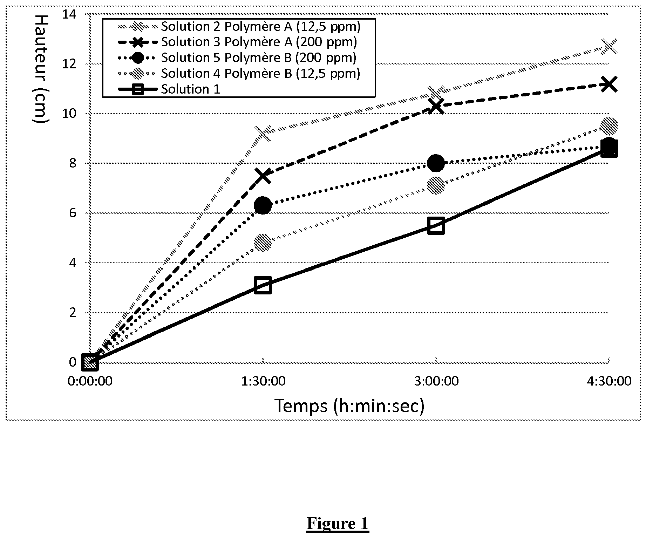

La figure 1 est un graphe représentant la hauteur d'humectation (cm) des échantillons de sols en fonction du temps (h) dans un test de remontée par capillarité.

### Exemple 1: Test de remontée par capillarité dans des colonnes de sol

Des échantillons de sols définis comme limono-sablo-argileux selon le triangle des textures de l'Aisne sont séchés, broyés et tamisés pour en retirer les éléments de dimension supérieure à 3 mm avant d'être disposés dans 5 tubes en PVC transparents (hauteur : 24 cm, diamètre 45 mm).

Chaque tube est muni en son fond d'un filtre à grosses mailles en acier inoxydable recouvert d'une couche de 1 cm de gravier filtrant. Les échantillons de sol sont ensuite conditionnés dans les tubes puis humectés au maximum avant d'être séchés à l'étuve pour obtenir des échantillons de sols structurés. Chaque colonne de sol a alors une hauteur de 18 cm.

Pour chacune des colonnes, la base est ensuite partiellement immergée verticalement dans une solution aqueuse (solutions 1 à 5 ci-dessous) de sorte que les 2,5 premiers centimètres inférieurs de chaque colonne de sol soient immergés dans la solution aqueuse. Au fur et à mesure de la succion de l'eau par la colonne de sol, le niveau des solutions aqueuses est maintenu à un niveau constant.

### Solution 1 : Eau

*Solution 2* : Solution aqueuse contenant 12.5 ppm d'un copolymère A d'acrylamide et d'acrylate de sodium dans l'eau. Le polymère contient 8 % moles d'acrylate de sodium. Cette solution est obtenue par dilution d'une solution mère du polymère de concentration massique à 40 %. La masse molaire du polymère est de l'ordre de 200 000 Da (viscosité intrinsèque : 1.18 dL/g, à 20°C, dans une solution de NaCl 1M à pH 7.0).

*Solution 3* : Equivalente à la solution 2 avec comme seule différence que la solution aqueuse contient 200 ppm du polymère A.

*Solution 4:* Solution aqueuse contenant 12.5 ppm d'un copolymère B d'acrylamide et d'acrylate de sodium dans l'eau. Le polymère contient 30 % moles d'acrylate de sodium. Cette solution est obtenue par dilution d'une dispersion de polymère de concentration massique en polymère à 15%. La masse molaire du polymère B est de l'ordre de 12 millions Da (viscosité intrinsèque : 17.75 dL/g, à 20°C, dans une solution de NaCl 1M à pH 7.0).

*Solution 5* : Equivalente à la solution 3 avec comme seule différence que la solution aqueuse contient 200 ppm du polymère B.

On a représenté sur la figure 1 la hauteur d'humectation (cm) des échantillons de sols en fonction du temps (h). Le point zéro est la surface de la solution aqueuse.

La remontée de l'eau par capillarité est essentielle pour garantir l'efficacité d'un système d'irrigation goutte à goutte enterré. Or, il s'avère que la diffusion la plus rapide se fait pour les solutions contenant le polymère A (polymère représentatif du polymère utilisé dans le procédé de l'invention).

### Exemple 2 : Test du risque de colmatage

Une eau d'irrigation synthétique est préparée en additionnant 160 mg/L de kaolin et 27 mg/L de CaCl₂ à de l'eau potable tirée du réseau de distribution. Cette eau d'irrigation synthétique serait, de par la quantité de matières en suspension, classée 10 sur une échelle allant jusque 20 telle qu'établie par Bucks, Nakayama et Gilbert en 1979 (Agricultural Water Management, 2, 1979, p 149-162)..

5 solutions mères de différents copolymères d'acrylamide et d'acrylate de sodium sont préparées pour obtenir des solutions concentrées à 0.1g/L (copolymères A à E de la Table 1).

**Table 1 : Liste des polymères.**

| | Forme | Anionicité | Poids moléculaire |
|---|---|---|---|
| Polymère A | Liquide concentré | 8% | 200 000 Da |
| Polymère B | Suspension | 30% | 12 000 000 Da |
| Polymère C | Emulsion inverse | 30% | 20 000 000 Da |
| Polymère D | Poudre | 30% | 15 000 000 Da |
| Polymère E | Poudre | 10% | 12 000 000 Da |

Remarque : les polymères A et B sont ceux de l'exemple 1.

2 mL de chaque solution mère sont additionnés dans 5 béchers différents à 500 mL de l'eau d'irrigation synthétique préparée initialement. Un 6^{ème} bécher ne contenant que 500 ml de l'eau d'irrigation synthétique est aussi préparé. Les 6 béchers sont bouchés pour être retournés simultanément 20 fois puis reposés.

En moins de 5 minutes, des flocs se forment dans les béchers contenant les polymères B, C et D. Il n'est pas possible de distinguer des flocs dans les béchers contenant l'eau d'irrigation seule et l'eau d'irrigation additionnée du polymère A.

Le contenu de chaque bécher est ensuite versé à travers un filtre tamis avec des mailles de 130 µm. Cette taille de mailles est communément utilisée pour filtrer une eau destinée à un système d'irrigation goutte à goutte (Irrigazette, N° 146, 2015, p 10-15 « The origins of filter use in agriculture »).

Le rétentat est ensuite récupéré par lavage du filtre à l'eau déminéralisée puis passé au dessiccateur pour quantifier la matière sèche retenue par le filtre.

**Table 2 : Matière sèche du rétentat**

| Essai | Masse de rétentat (mg) |
|---|---|
| Eau d'irrigation synthétique | Non mesurable |
| Eau d'irrigation synthétique + 0.4 ppm de polymère A | Non mesurable |
| Eau d'irrigation synthétique + 0.4 ppm de polymère B | 33.5 |
| Eau d'irrigation synthétique + 0.4 ppm de polymère C | 12.3 |
| Eau d'irrigation synthétique + 0.4 ppm de polymère D | 20.0 |
| Eau d'irrigation synthétique + 0.4 ppm de polymère E | 29.2 |

Les matières en suspension contenues dans cette eau d'irrigation synthétique ne sont donc pas retenues à travers un système de filtration communément utilisé pour un système d'irrigation localisée tel qu'un système d'irrigation goutte à goutte.

L'addition du polymère A, polymère représentatif du polymère utilisé dans le procédé de l'invention, contrairement aux autres polymères représentatifs de l'art antérieur, ne provoque pas la formation de flocs de tailles supérieures à 130 µm, qui pourraient colmater les orifices d'émission d'un dispositif d'irrigation localisée tel qu'un dispositif d'irrigation goutte à goutte.

Les polymères B, C, D et E, représentatifs de polymères utilisés dans l'art antérieur, provoquent eux la formation franche de flocs de tailles supérieures à 130 µm, qui pourraient colmater les orifices d'émission d'un dispositif d'irrigation localisé tel qu'un dispositif d'irrigation goutte à goutte.

### Exemple 3 : Diamètre horizontal en surface du bulbe d'humectation pour un système goutte à goutte de surface.

40 cm de terre sont disposés dans 36 bacs cubiques en plastique (profondeur: 90 cm, côté: 60 cm). Cette terre est de type limono-sabloneuse selon le triangle des textures de l'Aisne. La terre a préalablement été séchée, puis tamisée pour en retirer les éléments de plus de 3 mm.

Chaque bac est percé de part en part, à hauteur de la surface du sol pour permettre le passage d'un tuyau d'irrigation goutte à goutte, de proche en proche à travers les différents bacs, de sorte qu'un orifice d'émission soit disposé au centre de chacun des bacs. Le dispositif est répété trois fois par lot de 12 bacs

La ligne de goutteur en polyéthylène est de type UNIRAM® (fournie par Société NETAFIM). Les goutteurs sont autorégulant et présentent un débit de 0,7 L/h.

Trois solutions d'irrigation son préparées :
*Solution 1* : Eau (eau du réseau de distribution).
*Solution 2* : Solution aqueuse contenant 12,5 ppm du copolymère A.
*Solution 3* : Solution aqueuse contenant 12,5 ppm du copolymère B.

Chaque solution aqueuse est distribuée à travers le tuyau muni de goutteurs à une pression de 1,5 bar, à l'aide d'une pompe à membrane, pendant 2 heures.

Au bout des deux heures d'irrigation, pour chaque bulbe d'irrigation, le diamètre en surface est mesuré de façon longitudinale et orthogonale au tuyau d'irrigation goutte à goutte. Le diamètre moyen des bulbes d'irrigation en surface calculé est alors la moyenne de ces diamètres longitudinaux et orthogonaux.

Le diamètre moyen des 12 bulbes d'irrigation en surface pour chacune des trois solutions est alors calculé pour effectuer finalement une moyenne pour les 12 bulbes d'irrigation.

Les résultats obtenus sont alors exprimés en termes d'augmentation du diamètre du bulbe d'irrigation en prenant comme référence le diamètre moyen en surface pour les bulbes d'irrigation obtenus à l'aide de la solution 1 (Table 3).

En portant la comparaison au carré, le gain estimé s'exprime alors en termes d'augmentation de la surface d'humectation.

**Tables 3 : Gains obtenus**

| Type de Gain | Solution 2 (Polymère A) | Solution 3 (Polymère B) |
|---|---|---|
| Augmentation du diamètre | + 18,1 % | + 24,4 % |
| Augmentation de la surface. | + 39,4 % | + 54,7 % |

Le polymère A, polymère représentatif du polymère utilisé dans le procédé de l'invention, permet d'atteindre l'objectif d'augmentation de la diffusion horizontale de l'eau du bulbe d'irrigation.

La solution 3 (Polymère B) a nécessité la préparation intermédiaire d'une solution de polymère 1 g/L pour s'assurer de la bonne dilution de ce dernier. Cette solution intermédiaire a alors été additionnée à l'eau de la cuve destinée à l'irrigation. L'ensemble des étapes de préparation de la solution 2 a duré 2 heures.

La solution 2 (Polymère A) a été préparée en une seule étape par addition directe du polymère en solution concentrée à l'eau destinée à l'irrigation. La seule agitation générée par le retour cuve de la pompe à membrane a permis la préparation de la solution 3 en 10 minutes.

## Revendications

1. Procédé d'irrigation localisée de culture ou de plantations donnant naissance à un bulbe d'irrigation positionné à proximité de chaque point d'émission d'eau selon lequel on injecte dans l'eau d'irrigation destinée à alimenter un équipement fixe d'irrigation localisée au moins un polymère hydrosoluble de poids moléculaire compris entre 10 000 et 500 000 Da et contenant au moins un monomère acrylamide ou méthacrylamide.

2. Procédé selon la revendication 1, **caractérisé en ce que** le polymère hydrosoluble a un poids moléculaire compris entre 25 000 et 300 000 Da, avantageusement entre 50 000 et 250 000 Da.

3. Procédé selon l'une des revendications précédentes, **caractérisé en ce qu'**on ajoute le polymère dans l'eau d'irrigation dans des conditions telles que la concentration massique en polymère dans l'eau d'irrigation soit comprise entre 0.1 ppm et 500 ppm.

4. Procédé selon l'une des revendications précédentes, **caractérisé en ce que** le polymère hydrosoluble est injecté dans l'eau d'irrigation sous forme d'une solution aqueuse, dont la concentration massique en polymère hydrosoluble est comprise entre 10 et 60 %.

5. Procédé selon l'une des revendications précédentes, **caractérisé en ce que** le polymère hydrosoluble contient au moins 50 % molaire du monomère acrylamide ou méthacrylamide.

6. Procédé selon l'une des revendications précédentes, **caractérisé en ce que** le polymère hydrosoluble contient en outre de 1 à 50 % molaire de monomères anioniques.

7. Procédé selon la revendication 6 **caractérisé en ce que** le ou les monomères anioniques du polymères hydrosolubles sont choisis parmi l'acide acrylique, l'acide méthacrylique, l'acide itaconique, l'acide crotonique, l'acide maléique, l'acide fumarique ,l'acide 2-acrylamido-2-méthylpropane sulfonique, l'acide vinylsulfonique, l'acide vinylphosphonique, l'acide allylsulfonique, l'acide allylphosphonique, l'acide styrène sulfonique et leurs sels solubles dans l'eau d'un métal alcalin, d'un métal alcalino terreux, ou d'ammonium.

8. Procédé selon la revendication 1 **caractérisé en ce que** le ou les polymères hydrosolubles sont non ioniques.

9. Procédé selon la revendication 1, **caractérisé en ce que** le ou les polymères hydrosolubles contiennent des monomères cationiques de type acrylamide, acrylique, vinylique, allylique ou maléique possédant une fonction amine ou ammonium quaternaire, notamment choisi parmi l'acrylate de diméthylaminoéthyl (ADAME), le méthacrylate de diméthylaminoéthyle (MADAME) quaternisés ou salifiés, le chlorure de diméthyldiallylammonium (DADMAC), le chlorure d'acrylamido propyltriméthyl ammonium (APTAC) et le chlorure de methacrylamido propyltrimethyl ammonium (MAPTAC).

10. Procédé selon l'une des revendications précédentes, **caractérisé en ce que** le système d'irrigation localisée est un système goutte à goutte.

11. Procédé selon l'une des revendications précédentes, **caractérisé en ce que** le polymère hydrosoluble est injecté directement en ligne dans la canalisation d'eau d'irrigation.

## Patentansprüche

1. Verfahren zur lokalen Bewässerung von Kulturen oder Plantagen, das eine in der Nähe jedes Wasserabgabepunktes angeordneten Bewässerungsbulbus bereitstellt, gemäß dem man in das Bewässerungswasser, das dazu bestimmt ist, feste Ausrüstungen zur lokalen Bewässerung zu versorgen, mindestens ein wasserlösliches Polymer mit einem Molekulargewicht zwischen 10.000 und 500.000 Da einspritzt, das mindestens ein Acrylamid- oder Methacrylamid-Monomer enthält.

2. Verfahren gemäß Anspruch 1, **dadurch gekennzeichnet, dass** das wasserlösliche Polymer ein Molekulargewicht zwischen 25.000 und 300.000 Da, vorteilhafterweise zwischen 50.000 und 250.000 Da, aufweist.

3. Verfahren gemäß einem der vorstehenden Ansprüche, **dadurch gekennzeichnet, dass** das Polymer dem Bewässerungswasser unter solchen Bedingungen zugesetzt wird, dass die Massenkonzentration des Polymers im Bewässerungswasser zwischen 0,1 ppm und 500 ppm liegt.

4. Verfahren gemäß einem der vorstehenden Ansprüche, **dadurch gekennzeichnet, dass** das wasserlösliche Polymer in das Bewässerungswasser in Form einer wässrigen Lösung eingespritzt wird, wobei die Massenkonzentration des wasserlöslichen Polymers zwischen 10 und 60% liegt.

5. Verfahren gemäß einem der vorstehenden Ansprüche, **dadurch gekennzeichnet, dass** das wasserlösliche Polymer mindestens 50 Mol-% des Acrylamid- oder Methacrylamid-Monomers enthält.

6. Verfahren gemäß einem der vorstehenden Ansprüche, **dadurch gekennzeichnet, dass** das wasserlösliche Polymer zusätzlich 1 bis 50 Mol-% anionische Monomere enthält.

7. Verfahren gemäß Anspruch 6, **dadurch gekennzeichnet, dass** das anionische Monomer oder die anionischen Monomere des wasserlöslichen Polymers ausgewählt sind aus: Acrylsäure, Methacrylsäure, Itaconsäure, Crotonsäure, Maleinsäure, Fumarsäure, 2-Acrylamido-2-methylpropansulfonsäure, Vinylsulfonsäure, Vinylphosphonsäure, Allylsulfonsäure, Allylphosphonsäure, Styrolsulfonsäure und deren wasserlösliche Alkalimetall-, Erdalkalimetall- oder Ammoniumsalze.

8. Verfahren gemäß Anspruch 1, **dadurch gekennzeichnet, dass** das (die) wasserlösliche(n) Polymer(e) nichtionisch ist (sind).

9. Verfahren gemäß Anspruch 1, **dadurch gekennzeichnet, dass** das (die) wasserlösliche(n) Polymer(e) kationische Monomere vom Typ Acrylamid, Acryl, Vinyl, Allyl oder Malein mit einer Amin- oder quaternären Ammoniumfunktion enthält (enthalten), insbesondere ausgewählt aus Dimethylaminoethylacrylat (ADAME), quaternisiertes oder in ein Salz umgewandeltes Dimethylaminoethylmethacrylat (MADAME), Dimethyldiallylammoniumchlorid (DADMAC), Acrylamidopropyltrimethylammoniumchlorid (APTAC) und Methacrylamidopropyltrimethylammoniumchlorid (MAPTAC).

10. Verfahren gemäß einem der vorstehenden Ansprüche, **dadurch gekennzeichnet, dass** das lokalisierte Bewässerungssystem ein Tropfbewässerungssystem ist.

11. Verfahren gemäß einem der vorstehenden Ansprüche, **dadurch gekennzeichnet, dass** das wasserlösliche Polymer direkt bzw. Online in die Bewässerungswasserleitung eingespritzt wird.

## Claims

1. Method for the localized irrigation of crops or planted areas leading to an irrigation bulb positioned near each water emission point, whereby at least one water-soluble polymer having a molecular weight between 10,000 and 500,000 Da and containing at least one acrylamide or methacrylamide monomer is injected into the irrigation water intended for supplying a stationary localized irrigation device.

2. Method according to claim 1, **characterized in that** the water-soluble polymer has a molecular weight between 25,000 and 300,000 Da, advantageously between 50,000 and 250,000 Da.

3. Method according to one of the preceding claims, **characterized in that** the polymer is added to the irrigation water under conditions such that the weight concentration of polymer in the irrigation water is between 0.1 ppm and 500 ppm.

4. Method according to one of the preceding claims, **characterized in that** the water-soluble polymer is injected into the irrigation water in the form of an aqueous solution, the weight concentration of which in the water-soluble polymer is between 10 and 60%.

5. Method according to one of the preceding claims, **characterized in that** the water-soluble polymer contains at least 50 mol% of the acrylamide monomer or methacrylamide.

6. Method according to one of the preceding claims, **characterized in that** the water-soluble polymer further contains from 1 to 50 mol% of anionic monomers.

7. Method according to claim 6, **characterized in that** the anionic monomer(s) of the water-soluble polymers are chosen from among acrylic acid, methacrylic acid, itaconic acid, crotonic acid, maleic acid, fumaric acid, 2-acrylamido-2-methylpropane sulfonic acid, vinylsulfonic acid, vinylphosphonic acid, allylsulfonic acid, allylphosphonic acid, styrenesulfonic acid and the salts thereof soluble in water of an alkaline metal, an alkaline-earth metal or ammonium.

8. Method according to claim 1, **characterized in that** the water-soluble polymer(s) are non-ionic.

9. Method according to claim 1, **characterized in that** the water-soluble polymer(s) contain cationic monomer of the acrylamide, acrylic, vinylic, allylic or maleic type having a quaternary amine or ammonium function, in particular chosen from among dialkylaminoethyl acrylate (ADAME), dialkylaminoethyl methacrylate (MADAME), quaternized or in salt form, diallyl dimethyl ammonium chloride (DADMAC), acrylamidopropyl trimethyl ammonium chloride (APTAC) and methacrylamido-propyl trimethyl ammonium chloride (MAPTAC).

10. Method according to one of the preceding claims, **characterized in that** the localized irrigation system is a drip system.

11. Method according to one of the preceding claims, **characterized in that** the water-soluble polymer is injected directly in line into the irrigation water pipe.
